(19) Europäisches Patentamt

European Patent Office

Office européen des brevets

(11) **EP 1 348 669 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(51) Int Cl.$^7$: **C01B 33/18**, C01B 33/193, C08K 3/36, C09D 7/12, F26B 23/02, C09C 1/30

(21) Anmeldenummer: **02007442.3**

(22) Anmeldetag: **30.03.2002**

(54) **Fällungskieselsäure mit enger Partikelgrössenverteilung**

Precipitated silica having narrow particle size distribution

Silice de précipitation presentant une distribution granulométrique étroite

(84) Benannte Vertragsstaaten:
**AT BE CH CY DE DK ES FI FR GB GR IE IT LI LU MC NL PT SE TR**

(43) Veröffentlichungstag der Anmeldung:
**01.10.2003 Patentblatt 2003/40**

(60) Teilanmeldung:
**04106954.3 / 1 541 525**

(73) Patentinhaber: **Degussa AG**
**40474 Düsseldorf (DE)**

(72) Erfinder:
• **Maus, Ralf, Dr.**
**60385 Frankfurt (DE)**
• **Barthel, Thomas**
**63755 Alzenau (DE)**
• **Klasen, Claas-Jürgen, Dr.**
**63579 Freigericht (DE)**

(56) Entgegenhaltungen:
EP-A- 0 901 986      EP-A- 0 922 671
US-A- 4 941 820      US-A- 5 638 609

• **ANONYMOUS: "Pulse Technology FAQ" INTERNET ARTICLE, [Online] 2. Februar 2001 (2001-02-02), XP002212801 Gefunden im Internet: <URL:http://web.archive.org/web/2001020219 3400/pulsedry.com/faq.html> [gefunden am 2002-09-05]**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 348 669 B1

**Beschreibung**

Die Erfindung betrifft feindisperse Kieselsäuren mit engen Partikelgrößenverteilungen und Verfahren zu deren Herstellung.

Kieselsäuren werden großtechnisch durch Fällung von Wasserglas oder durch Verbrennung von Siliziumtetrachlorid im $H_2/O_2$-Strom hergestellt. Die so erhaltenen Produkte weisen meist nicht die gewünschte Korngröße auf bzw. müssen noch einer Trocknung unterworfen werden. Die durch die Herstellung eingestellten Produkteigenschaften wie die spezifische Oberflächen nach BET- oder CTAB-Messung sollen durch den Trocknungs-/Mahlschritt möglichst wenig verändert werden.

Gängig sind zur Zerkleinerung oder Mahlung von Kieselsäuren Strahl- oder Prallmühlen und zur Trocknung Sprühtrockner, Etagentrockner, Drehrohrtrockner oder Düsentürme. Die Trocknung einer Kieselsäuresuspension im Düsenturm bewirkt gleichzeitig eine Partikelbildung.

Die Kombination der Prozessschritte a) Herstellung der Kieselsäure durch Fällung oder Verbrennung, b) Trocknung und c) Vermahlung ist - selbst wenn z. B. in einem Düsenturm b) und c) zusammenfallen - zur Herstellung von Kieselsäurepartikeln mit möglichst enger Größenverteilung nicht befriedigend, so dass häufig noch ein Sieb- oder Klassierschritt durchgeführt werden muss. Dies ist aufwendig.

Aufgabe der vorliegenden Erfindung war es daher, Kieselsäure mit feineren und einer engeren Partikelgrößenverteilung bereitzustellen.

Die Partikelgrößenverteilung sollte im Idealfall eine nachträgliche Vermahlung oder Klassierung unnötig machen.

Es wurde gefunden, dass durch Trocknung einer Kieselsäuresuspension in einem Pulse Combustion Dryer Kieselsäuren mit feiner und enger Partikelgrößenverteilung erhalten werden können.

Zur Trocknung von Suspensionen sind Pulse Combustion Dryer (PCD) lange bekannt (US 4 819 873, US 4 941 820, US 4 708 159). Die Verwendung eines PCD zur Trocknung von Kieselsäuresuspensionen ist nicht beschrieben. Der über eine Trocknung hinausgehende Effekt der engen Partikelgrößenverteilung ist ebenfalls nicht beschrieben und war daher auch nicht zu erwarten.

**Pulse Combustion Dryer**

**Grundlagen der verwendeten Trocknungstechnologie**

Beim Pulse Combustion Dryer (PCD) handelt es sich um eine Anlage zur konvektiven Trocknung von Suspensionen. Wesentlich für diese Technologie ist in erster Linie der Erdgasbrenner, der einen pulsierenden Heißgasstrom erzeugt und dabei thermische und mechanische Energie freisetzt, die zur Zerstäubung und Trocknung der Trocknerspeise genutzt wird.

Der nach dem Prinzip des Helmholtz-Resonators bei einer Zündfrequenz von etwa 100 Hz arbeitende Pulsationsbrenner erlaubt die Dispergierung der Trocknerspeise ohne mechanisch bewegte Teile (Rotationzerstäuber) oder Düsen. Dadurch bleibt die Produktbeanspruchung (Scherung) gering. Zusätzlich ergibt sich ein geringer Wartungsaufwand für die Zerstäubungseinheit und eine hohe Zuverlässigkeit.

Durch die hohe Brennraumbelastung und die niedrigen Gasströme, sowie die sehr schnelle Trocknung der Partikel, ergibt sich eine vergleichsweise geringe Baugröße.

Durch die turbulente Strömung wird gegenüber einer stationären Verbrennung ein verbesserter Wärme- und Stoffübergang erzielt.

Vorteilhaft ist die realtiv einfache und kostengünstige Möglichkeit, diese Technologie in vorhandene, mit konventionellen Srpühtrocknern ausgestattete, Anlagen zu integrieren.

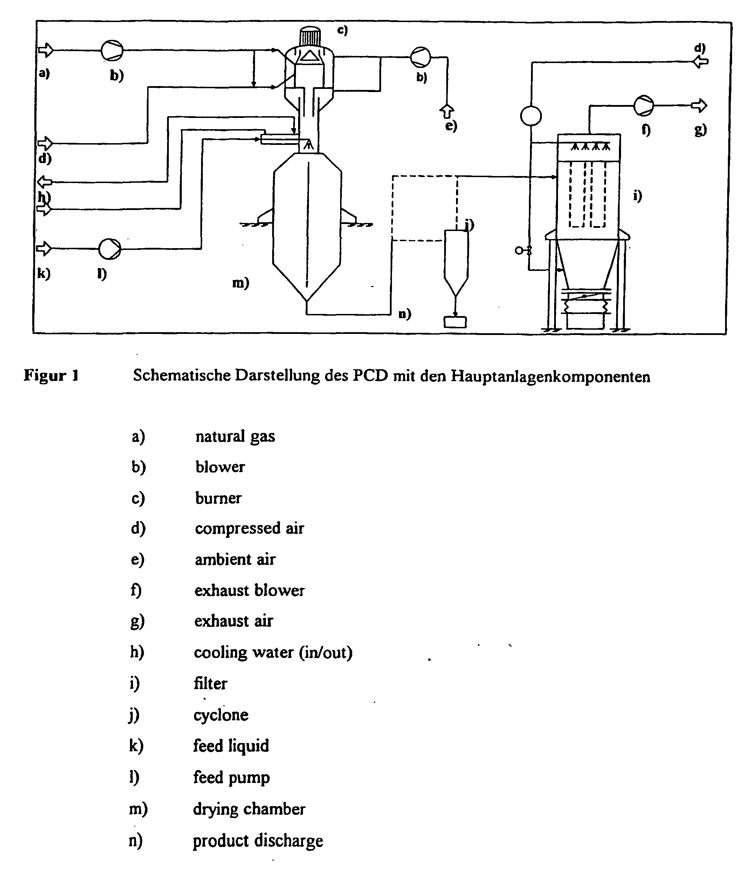

Die Figur 1 zeigt einen typischen Aufbau einer PCD-Anlage; die Hauptkomponenten und deren Funktion sind nachfolgend aufgeführt:

| Element | Funktion |
|---|---|
| Brenner | Erzeugung eines pulsierenden Heißgasstromes zur Zerstäubung und Trocknung der Trocknerspeise |
| Trocknungskammer | Kühlt den Heißgasstrom durch Vermischen mit Umgebungsluft (Quenchen); bestimmt in Verbindung mit dem Gasstrom die Verweilzeit der Partikel |
| Zuluftgebläse | Versorgt die Brennkammer mit Luft, um ein zündfähiges Erdgas/Luft-Gemisch zu erzeugen |
| Erdgas-verdichter | Verdichtet das Erdgas vom Netzvordruck auf das für den Brenner erforderliche Niveau |

(fortgesetzt)

| Element | Funktion |
|---------|----------|
| Feed-Pumpe | Fördert die Trocknerspeise in den Heißgasstrom und reguliert über die Fördermenge die Temperatur am Trockneraustritt |
| Zyklon | Scheidet den Feststoff aus dem Gasstrom ab (Teilabscheider); kann umgangen werden |
| Filter | Scheidet den Feststoff aus dem Gasstrom ab (Absolutabscheider) |
| Abluftgebläse | Bestimmt den Gasstrom |

Im Brenner wird über ein schnell rotierendes Luftansaugventil Frischluft angesaugt. Getrennt davon erfolgt die Zufuhr von Erdgas direkt in die Brennkammer, wo das Gas-Luft-Gemisch gezündet wird, aber keine stationäre Flamme entsteht. Da das Luftansaugventil im Augenblick der Zündung geschlossen ist, breitet sich die entstehende Druckwelle über die sog. Tailpipe nach unten in die Trockenkammer aus. Die Suspension wird unterhalb der Brennkammer am Ende der Tailpipe nahezu drucklos in die Zerstäubungszone getropft. Dies geschieht mit einem wassergekühlten Doppelmantelrohr axialsymetrisch in den pulsierenden Heißgasstrom und somit ohne mechanisch bewegte Bauteile.

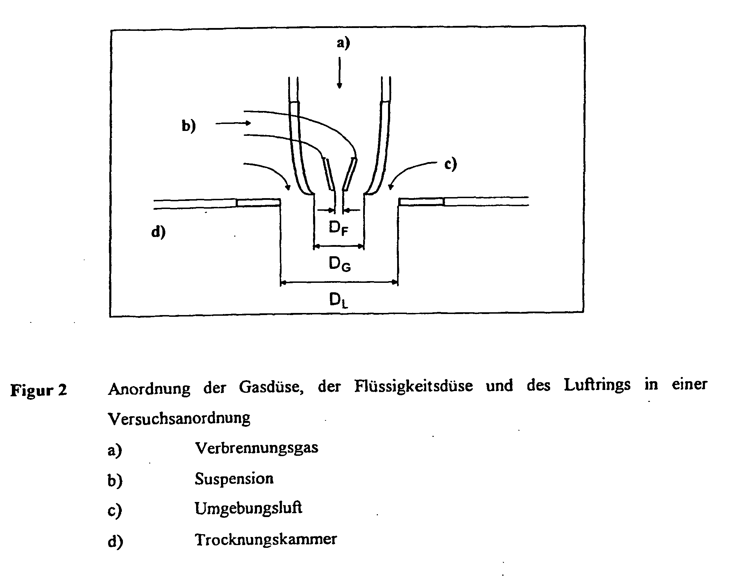

Um unterschiedliche Betriebszustände hinsichtlich Temperatur und Gasdurchsatz einzustellen, kann der Trockner mit verschiedenen Gas- und Flüssigkeitsdüsen ausgerüstet werden. Zusätzlich läßt sich die Menge der in die Trockenkammer eingesaugten Umgebungsluft durch Variation des sog. Luftrings regulieren. Die Anordnung dieser Elemente ist in Figur 2 dargestellt.

Die Auswahl richtet sich in erster Linie nach dem Durchsatz, berücksichtigt werden müssen aber auch die Suspensions- und Feststoffeigenschaften. Durch Wechsel der Gasdüse verschiebt sich die Resonanzfrequenz des Brenners. Dies muß durch die Drehzahl des Luftventils ausgeglichen werden.

Der Anlagenbetrieb wird überwiegend durch zwei Temperaturen charakterisiert und kontrolliert. Zum einen wird über den Erdgasstrom die Heißgastemperatur am Eintritt der Trockenkammer eingestellt, zum anderen reguliert die Speisepumpe durch den Feed-Strom die Temperatur am Austritt der Kammer. Weitere Einflußmöglichkeiten auf den Betriebszustand ergeben sich aus der folgenden Aufstellung:

| Parameter | Einfluß |
|-----------|---------|
| Öffnungsquerschnitt für Verdüsungsluft | Einstellung der Heißgastemperatur |
| Massenstrom der Trocknerspeise | Einstellung der Gasaustrittstemperatur |
| Drehzahl des Luftansaugventiles | Beeinflussung des Resonanz-Zustandes |
| Öffnungsquerschnitt des Erdgasventiles | Einstellung der Heißgastemperatur |
| Volumenstrom der Bypass-Luft (Quench-Luft) | Trocknungstemperatur Amplitude der Druckwellen (Zerstäubungswirkung) |

**Modifikation der Heißgasströmung**

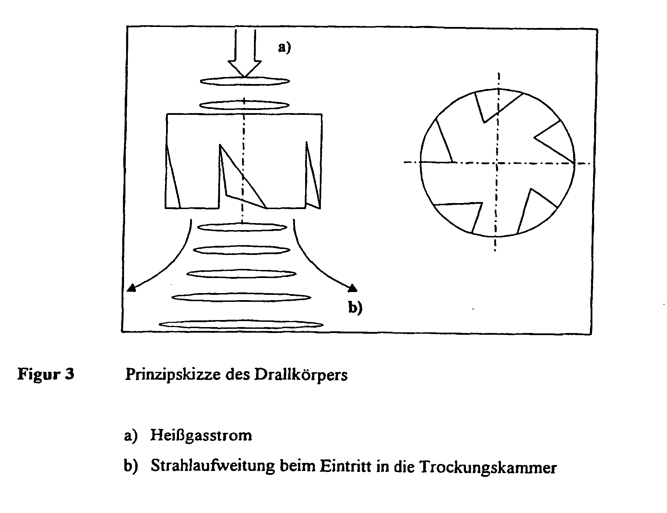

Ein Vorzug des PCD ist die sehr kurze Kontaktzeit zwischen Heißgas und Produkt. Um die Kontaktzeit für empfindliche Trocknungsgüter noch weiter zu senken, ist der Einbau eines sogenannten Drallkörpers möglich. Dieser versetzt den in die Trocknungskammer eintretenden Luftstrom in eine rotierende Bewegung, die den Feststoff unmittelbar aus der heißen Kernzone herausträgt. Eine Skizze des Drallkörpers ist in Figur 3 dargestellt.

**Partikelgröße**

Die Trocknung im PCD beeinflußt die durch Fällung oder Verbrennung (pyrogener Kieselsäure) eingestellte Partikelgröße der Kieselsäure nicht wesentlich. Die Verteilung ist jedoch deutlich enger als bei sprühgetrocknetem oder gemahlenem Pulver.

**Partikelform**

Im direkten Vergleich mit sprühgetrocknetem Produkt und noch klarer gegenüber vermahlenem Pulver, ist bei PCD-getrockneten Produkten die gleichmäßige, kugelige Partikelform zu erkennen. Die Partikeloberfläche ist glatter als bei Vergleichsprodukten und weißt kaum Unregelmäßigkeiten auf. Hinweise auf die Entstehung von Hohlkugeln wurden nicht gefunden, d. h. die erfindungsgemäßen Kieselsäuren weisen weitgehend eine massive Partikelform auf. Die Bildung von größeren Agglomeraten wurde nicht beobachtet.

**Anwendungstechnische Eigenschaften**

Bei den Produkteigenschaften Spezifische Oberfläche (BET), DBP-Aufnahme, Stampfdichte, Siebrückstand und Restfeuchte erreicht das PCD-Produkt die Spezifikation der konventionell hergestellten Produkte. Die Verwendung eines PCD zur Herstellung von Kieselsäurepartikeln hat bemerkenswerte Vorteile gegenüber anderen Trocknungsmethoden.

Die Kieselsäuren gemäß der Erfindung werden an sich in üblicher Weise durch Fällung von Wasserglas mit Schwefelsäure hergestellt, wobei die gesamte Breite der möglichen Fällungsvarianten zum Einsatz kommen kann, wie z. B. in EP 0 078 909, US 4 094 771 oder US 6 013 234 beschrieben.

In Anschluß an eine solche Fällung kann der Feststoff abfiltriert und der Filterkuchen - ggf. unter Säurezusatz redispergiert - und anschließend sprühgetrocknet werden. Sprühgetrocknete Fällungskieselsäuren sind bekannt und z. B. unter dem Namen Sipernat® im Handel.

Ein ähnliches Verfahren wird in US 601 32 34 offenbart. Hier wird eine Kieselsäuresuspension mit einem pH > 4 und einem Feststoffanteil über 18 Gew.-% zu Partikeln mit einem mittleren Teilchendurchmesser über 150 $\mu$m und einer BET-Oberfläche von 100 bis 350 m$^2$/g sprühgetrocknet.

Die Sprühtrocknung liefert zwar kugelförmige Partikel, jedoch ist die Größenverteilung nicht befriedigend eng.

Die Partikelgrößenverteilung kann durch Laserbeugung bestimmt werden. Hier werden die Größe der Partikel bestimmt, die 5, 50 und 95 % des Volumens ausmachen.

Gegenstand der Erfindung sind Kieselsäuren, die durch folgende physikalisch- chemische Stoffdaten gekennzeichnet sind:

| | | |
|---|---|---|
| BET-Oberfläche (DIN 66131) | m$^2$/g | 100 - 700 |
| DBP-Absorption (DIN 53601, bezogen auf getrocknete Substanz) | g/100 g | 100 - 500 |
| Stampfdichte (ISO 787-11) | g/l | 100 - 250 |
| ALPINE-Siebrückstand > 63$\mu$ (ISO 8130-1) | % | < 5 |
| Partikelgrößen | $d_{95}$ | < 40 $\mu$m |
| (Volumensummenverteilung) | $d_{50}$ | < 20 $\mu$m |
| | $d_5$ | < 10 $\mu$m |

Weitere Gegenstände der vorliegenden Erfindung sind Verfahren zur Herstellung von Kieselsäure mit einer feinen und engen Partikelgrößenverteilung, wobei die Partikelgrößenverteilung (Volumensummenverteilung)

$$d_5 < 10 \ \mu m$$

$$d_{50} < 20 \ \mu m$$

$$d_{95} < 40 \ \mu m$$

durch Trocknung einer Kieselsäuresuspension in einem Pulse Combustion Dryer eingestellt wird.

In besonderen Ausführungsformen der Erfindung können die Werte der BET-Oberfläche zwischen 150 und 600, bevorzugt zwischen 200 und 400 m$^2$/g liegen.

Weiterhin kann die DBP-Absorption zwischen 150 und 400, bevorzugt zwischen 200 und 400 g/l liegen.

Die Kieselsäuren gemäß der Erfindung bzw. dem Verfahren der Erfindung werden zunächst mit den üblichen Verfahren hergestellt, d. h. es können Fällungskieselsäuren oder pyrogene Kieselsäuren verwendet werden.

Diese werden in eine Suspension mit einem Feststoffgehalt von 5 bis 25 Gew.-% mit Wasser, gegebenenfalls unter Zuhilfenahme von Säuren, verflüssigt. Für Feststoffgehalt über 18 Gew.-% sollte der pH unter 4, bevorzugt zwischen 2 und 4, liegen. Die so erhaltene Suspension wird mittels einem Pulse Combustion Dryer (PCD) bei Temperaturen von 400 bis 800, bevorzugt 650 bis 750 °C getrocknet.

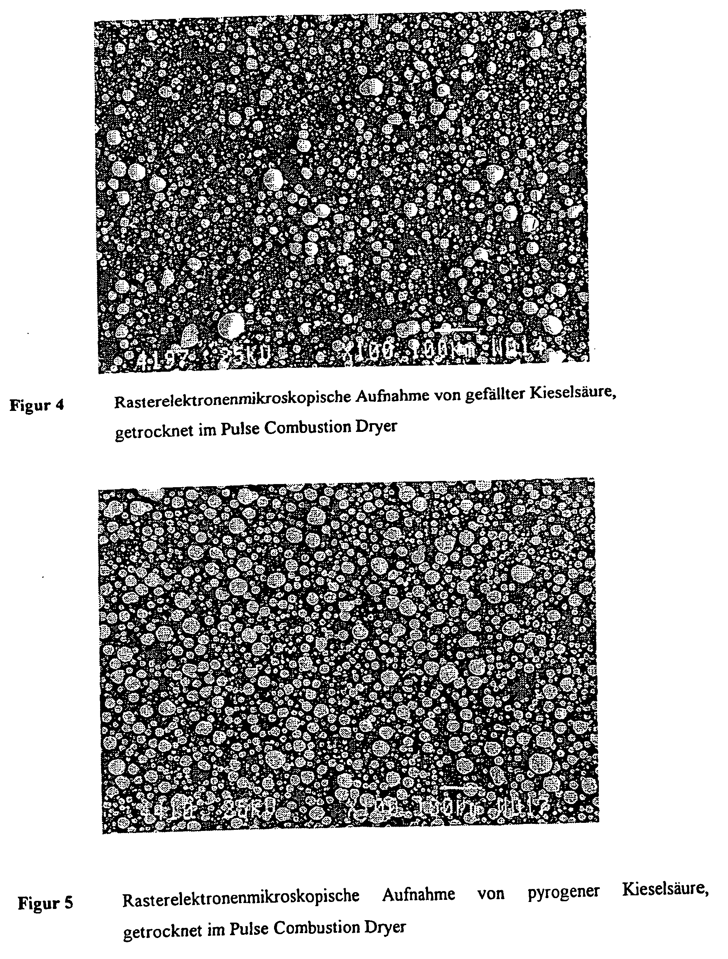

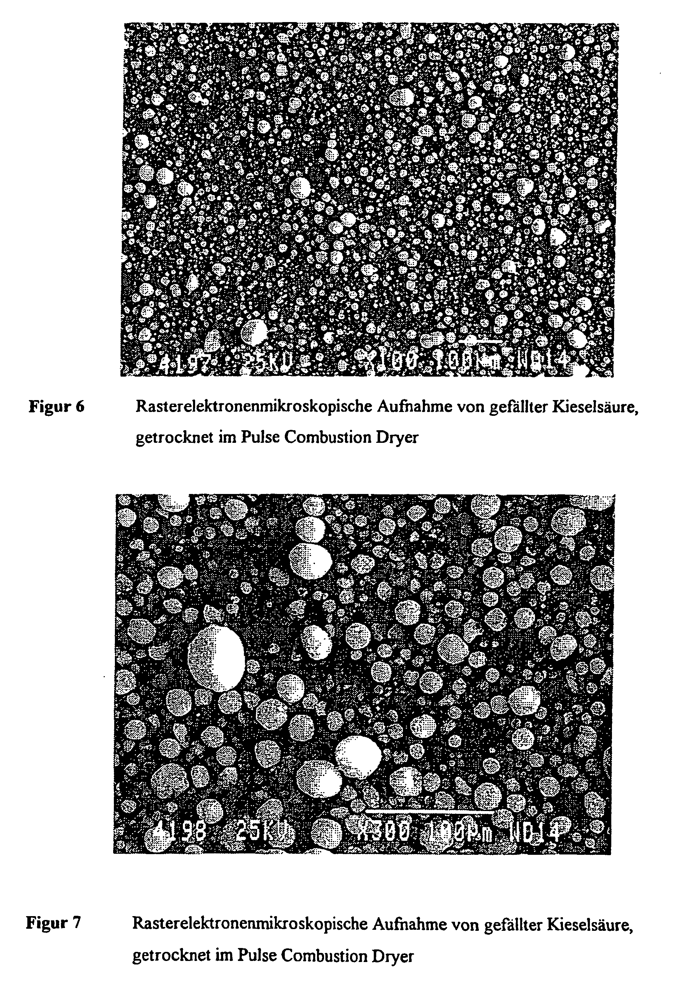

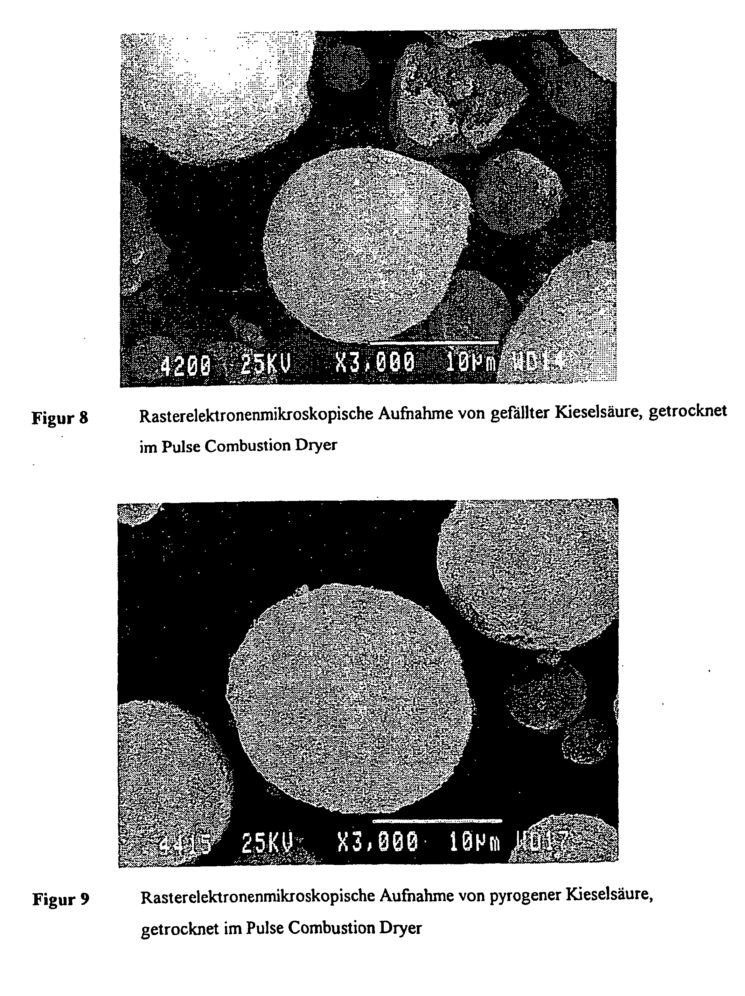

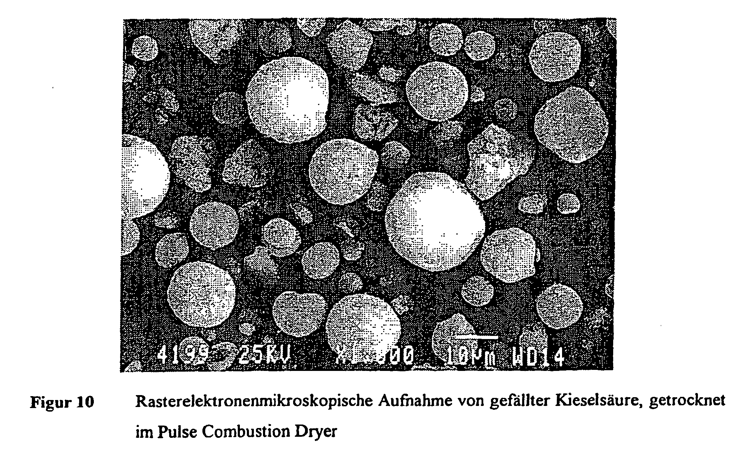

Die Figuren 4 bis 10 zeigen mit PCD-Verfahren getrocknete Kieselsäuren.

Man kann gut erkennen, daß die meisten Partikeln kugelförmig sind und eine relativ glatte Oberfläche besitzen. Da keine schalenförmigen Bruchstücke von Partikeln gefunden wurden, kann man vermuten, daß alle Partikeln massiv sind. Sehr feine Partikeln sind nur selten zu finden, da diese zu einem großen Anteil den Produktzyklon passieren und erst im Filter vom Gasstrom abgetrennt werden. Massenmäßig ist bei den gewählten Einstellungen das im Filter gesammelte Produkt zu vernachlässigen.

Weiterhin kann die erfindungsgemäße Kieselsäure eine hohe Dispergierbarkeit aufweisen.

Zur Erzielung z. B. eines guten Wertebildes in einer Elastomerenmischung ist die Dispersion der Fällungskieselsäure in der Matrix, dem Elastomeren, von entscheidender Bedeutung. Es hat sich gezeigt, dass der wk-Koeffizient ein Maß für die Dispergierbarkeit einer Fällungskieselsäure ist. Der wk-Koeffizient wird wie folgt bestimmt:

Die Messung beruht auf dem Prinzip der Laserbeugung. Dabei wird mit einem CILAS-Granulometer 1064 L gemessen. Zur Bestimmung werden 1,3 g der Fällungskieselsäure mit 25 ml Wasser überführt und 4,5 Minuten mit Ultraschall bei 100 W (90 % gepulst) behandelt. Danach wird die Lösung in die Meßzelle überführt und eine weitere Minute mit Ultraschall behandelt. Die Detektion mit Hilfe zweier sich in einem unterschiedlichen Winkel zur Probe befindlichen Laserdioden erfolgt während der Ultraschallbehandlung. Nach dem Prinzip der Lichtbeugung werden die Laserstrahlen gebeugt. Das entstehende Beugungsbild wird rechnergestützt ausgewertet. Die Methode ermöglicht es, über einen weiten Meßbereich (ca. 40 nm - 500 μm) die Partikelgrößenverteilung zu bestimmen.

Ein wesentlicher Punkt hierbei ist, dass der Energieeintrag durch Ultraschall eine Simulation des Energieeintrags durch mechanische Kräfte in den Knetern der Reifenindustrie, d. h. für eine Elastomerenanwendung darstellt.

Die Kurven zeigen im Bereich um 1,0 - 100 μm ein erstes Maximum in der Partikelgrößenverteilung und im Bereich < 1,0 μm ein weiteres Maximum. Der Peak im Bereich 1,0 - 100 μm gibt den Anteil an unzerkleinerten Kieselsäurepartikel nach der Ultraschallbehandlung an. Diese recht groben Partikel werden in den Kautschukmischungen schlecht dispergiert. Der zweite Peak mit deutlich kleineren Partikelgrößen (< 1,0 μm) gibt denjenigen Teil an Partikeln der Kieselsäure, der während der Ultraschallbehandlung zerkleinert worden ist, an. Diese sehr kleinen Partikel werden in Elastomerenmischungen ausgezeichnet dispergiert.

Der wk-Koeffizient ist nun das Verhältnis der Peakhöhe der nicht abbaubaren Partikel (B), deren Maximum im Bereich 1,0 - 100 μm liegt, zur Peakhöhe der abgebauten Partikel (A), deren Maximum im Bereich < 1,0 mm liegt.

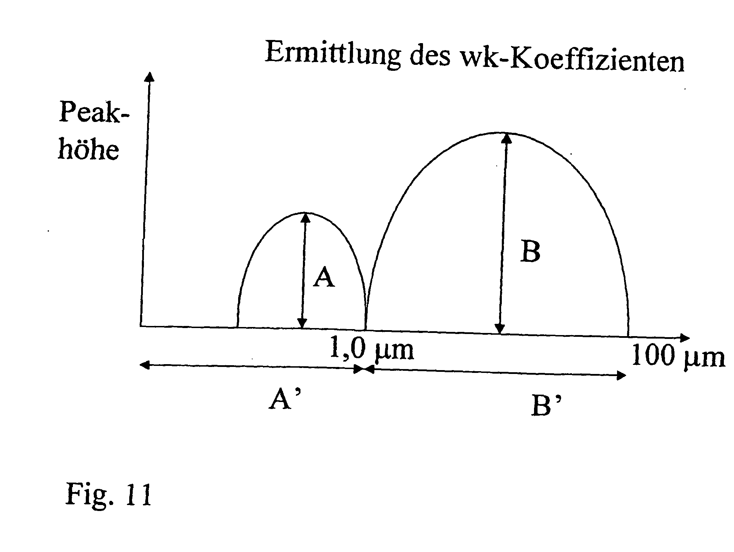

Die Zusammenhänge veranschaulicht die Grafik gemäß Figur 11. In der Figur 11 bedeuten:

$$wk = \frac{\text{Peakhöhe der nicht abbaubaren Partikel (B)}}{\text{Peakhöhe der abgebauten Partikel (A)}}$$

A' = Bereich von 0 bis y 1,0 μm
B' = Bereich 1,0 μm - 100 μm.

a) Der wk-Koeffizient ist damit ein Maß für die "Abbaubarkeit" (=Dispergierbarkeit) der Fällungskieselsäure. Es gilt: Eine Fällungskieselsäure ist umso leichter dispergierbar, je kleiner der wk-Koeffizient ist und je mehr Partikel bei der Einarbeitung in ein Elastomer abgebaut werden.

b) Die erfindungsgemäßen Kieselsäuren haben wk-Koeffizienten < 3,4. Das Maximum in der Partikelgrößenverteilung der nicht abbaubaren Partikel der erfindungsgemäßen Fällungskieselsäure liegt im Bereich 1,0 - 100 μm Das Maximum in der Partikelgrößenverteilung der abgebauten Partikel der erfindungsgemäßen Fällungskieselsäure liegt im Bereich < 1,0 μm.

c) Bekannte Fällungskieselsäuren haben meist deutlich höhere wk-Koeffizienten und andere Maxima in den Partikelgrößenverteilungen gemessen mit dem CILAS-Granulometer 1064 L und sind somit schlechter dispergierbar.

Es ist möglich, dass die erfindungsgemäßen Kieselsäuren eine organische oder hydrophobe Beschichtung aufweisen. Dies kann durch Behandeln mit einer Wachsemulsion ermöglicht werden. Typisch sind Kohlenstoffanteile der so behandelten Kieselsäuren von 5 Gew.-%.

Die erfindungsgemäßen Kieselsäuren, insbesondere solche mit organischer Beschichtung oder Hydrophobierung können als Mattierungsmittel für Lacke verwendet werden.

Die Qualität eines Mattierungsmittels wird über den Reflektometerwert, Grindometerwert, die Teilgrößen und -Verteilung und den Grobkornanteil (Stippenanteil) bestimmt. Häufig müssen Kieselsäuren für Mattierungsmittel nachvermahlen und/oder klassiert werden.

Das erfindungsgemäße Produkt zeigt im Vergleich zum Standard deutlich verbesserte Mattierungseigenschaften (60°-Reflektometerwert: 20 im Vergleich zum Standard: 27). Die verbesserte Mattierungswirkung kann auf das gröbere Kornspektrum der PCD-Produkte ($d_{50}$ = 8 um, Grindometer = 39 ± 2 μm) im Vergleich zum Standard ($d_{50}$ = 6 μm, Grindometer = 28 ± 3 μm) zurückgeführt werden.

Durch die optionale Sichtung der erfindungsgemäßen Produkte konnten die Grindometerwerte und Stippengehalte der erfindungsgemäßen Kieselsäuren weiter verbessert werden.

Die in der Fällung eingestellten mattierungsrelevanten Eigenschaften konnten mit dem PCD in besonderem Maße erhalten werden. Die Technologie ist somit zur Trocknung von feindispersen Kieselsäuresuspensionen besonders geeignet.

Neben einer Beschichtung mit organischen Komponenten können die Kieselsäuren vor der Trocknung hydrophobiert werden. Hier eignen sich besonders Organosilanverbindungen wie z. B. Dimethylsilan oder Silikonöle.

Die erfindungsgemäßen Kieselsäuren können weiterhin als Füllstoff in Elastomerenmischungen, z. B. für Reifen verwendet werden. Hier ist die hohe Dispergierbarkeit besonders wichtig, da sich die Kieselsäuren schnell und homogen in der Mischung verteilen müssen.

Die Dispergierbarkeit wird - wie beschrieben - über den wk-Koeffizienten bestimmt. Erfindungsgemäße Kieselsäuren besitzen wk-Koeffizienten von kleiner 3.4 bevorzugt kleiner 2.

Gegenstand der vorliegenden Erfindung sind daher auch Elastomerenmischungen wie Reifen, die die erfindungsgemäßen Kieselsäuren bzw. erfindungsgemäß hergestellten Kieselsäuren enthalten.

Die weiteren Produkteigenschaften der Kieselsäuren sind weitgehend durch die Trocknungstemperatur bestimmt und können gegebenenfalls durch Veränderungen der Ausgangstemperatur des PCD verändert werden. Diese Temperaturen liegen zwischen 100 und 130 °C.

Die pH-Werte der Kieselsäuren werden durch die PCD-Trocknung der Suspension kaum verändert, und durch den pH-Wert der Suspension bestimmt. Dieser pH-Wert kann z. B. durch Säuren- und/oder Basenzugabe verändert werden.

In einer besonderen Ausführungsform der Erfindung wird die Kieselsäure nach der Trocknung granuliert. Dies ist bei der Verarbeitung sehr feinteiliger Kieselsäuren zur Bindung des Staubanteils zu empfehlen. Weiterhin kann die Kieselsäure klassiert werden, um Fein- oder Grobanteile weiter zu reduzieren. Dies kann durch handelsübliche Klassiersiebe erfolgen.

Es ist auch möglich, mittels des in Fig. 1 skizzierten Aufbaus einer PCD-Anlage eine grobe Klassierung der Kieselsäure vorzunehmen.

In einer besonderen Ausführungsform der Erfindung wird das getrocknete Produkt aus der Trockenkammer durch ein Zyklon und einen Filter gesammelt. Im Zyklon finden sich die größeren Partikel mit den bereits genannten Mediumwerten.

Die im Filter gesammelten Kieselsäurepartikel sind kleiner und weisen eine Partikelverteilung mit $d_{95}$ = < 40, $d_{50}$ < 50 und $d_5$ < 5 µm auf.

Wie in den Figuren 1 und 2 gezeigt, kann das Verfahren auch mit einer Kühlung des Produktstroms durchgeführt werden. Der PCD kann daher neben der Gasdüse und dem Drallkörper über eine Zufuhr von Luft ("Luftring", "compressed air") oder Wasser ("cooling water") verfügen. Die nachfolgenden Beispiele sollen sowohl zum Beleg der Ausführbarkeit der Erfindung dienen als auch das Verständnis erleichtern.

**Beispiele:**

### 1. Einleitung

Mattierungsmittel auf Basis gefällter Kieselsäuren werden nach unterschiedlichen Verfahren hergestellt, in denen jeweils die gewünschten Produkteigenschaften determiniert werden. Eine wichtige anwendungstechnische Größe ist der Grindometerwert, der in der Regel durch eine Vermahlung/Sichtung des getrockneten Produktes eingestellt wird. Als Trocknungsverfahren kommen die Langzeittrocknung mittels Etagentrockner und die Kurzzeittrocknung mittels Sprühtrockner zum Einsatz.

### 2. Versuchsaufbau gemäß Figur 1

Beim eingesetzten PCD handelt es sich um eine Anlage zur konvektiven Trocknung von Suspensionen. Wesentlich für diese Technologie ist in erster Linie der Erdgasbrenner, der einen pulsierenden Heißgasstrom erzeugt und dabei thermische und mechanische Energie freisetzt, die zur Zerstäubung und Trocknung der Trocknerspeise genutzt wird. Der nach dem Prinzip des Helmholtz-Resonators bei einer Zündfrequenz von etwa 100 Hz arbeitende Pulsationsbrenner erlaubt die Dispergierung der Trocknerspeise ohne mechanisch bewegte Teile (Rotationzerstäuber) oder Düsen. Das feine Tröpfchenspektrum wird durch die hohe Frequenz der Druckwellen generiert.

### 3.Versuchsdurchführung

Als Speise für den PCD wurde eine Suspension einer gemäß EP 0 901 986 hergestellten Fällungskieselsäure eingesetzt. Dazu wurde ein entsprechender Filterkuchen durch Zusatz von Wasser verflüssigt. Als Versuchsparameter wurden die Feststoffkonzentration (4 - 12 %), die Heißgastemperatur (750 und 450 °C) und die Austrittstemperatur des Trockners (105 und 125 °C) variiert. Als zusätzlicher Parameter wurde in einer zweiten Kampagne (im Hinblick auf eine Kornzerkleinerung und damit Variation des Grindometerwertes) die Suspension mittels Hochleistungs-Dispergiergeräten unterschiedliche Zeiträume geschert. Die unter den o. g. Bedingungen erzeugten Pulver wurden anschließend bezüglich verschiedener Produkteigenschaften insbesondere Partikelgrößen und lacktechnischen Eigenschaften analysiert. Die Partikelgrößenverteilungen wurden mit Laserbeugung (CILAS, 60 sec. Ultraschall) gemessen. Der Grindometerwert wurde dreifach im Schwarzlack bestimmt und der Mittelwert berechnet (Standardabweichung < 5 μm).

## 4. Versuchsergebnisse

### 4.1 Vergleich Sprühtrocknung-PCD

Als Zielgrößen werden hier nur die Partikelgrößen des produzierten Pulvers diskutiert werden. Die Ergebnisse zeigen, dass die Partikelgrößenverteilungen (gemessen mit Laserbeugung) des mit PCD und dem im Sprühtrockner getrockneten Produktes nahezu identisch sind. Das bedeutet, dass das PCD-Produkt deutlich gröber als das vermahlene Endprodukt gemäß EP 0 901 986 ist.

Partikelgrößen für die erfindungsgemäße Kieselsäure mit

- x = Partikelgröße für Mengenanteil
- Temperaturen: Eintritt/Austritt
- c = Feststoffkonzentration der Trocknerspeise in %,
- Daten für Produkt aus Zyklon bzw. Filter (s. Figur 1)

Dies äußerst sich auch in den lacktechnischen Daten zu den Glanzwerten, die deutlich unter denen für den Standard gemäß EP 0 901 986 liegen. Der mittlere Reflektometerwert 60° liegt für die hier untersuchten 10 Versuchsprodukte bei 20 ± 2 Punkten und der mittlere Grindometerwert bei 39 ± 2 μm. Das Produkt übertrifft somit die Mattierungseigenschaften von Kieselsäuren gemäß EP 0 901 986. Hier bestätigt sich, dass die Zerstäubungsmethode des PCD ein dentlich feineres bzw. engeres Partikelspektrum erzeugt, als einen Sprühtrockner mit Zweistoffdüsen.

### 4.2 Gesichtete PCD-Versuchsprodukte

In einem weiteren Verfahrensschritt wurden ausgewählte PCD-Versuchsprodukte mit einem Alpine ATP 50 Labor-Sichter klassiert, um die Anteil der Stippen zu reduzieren bzw. zu eliminieren. Für die Sichtung wurden Probenmuster ausgewählt, die relativ hohe Stippengehalte und Grindometerwerte aufwiesen, um eine konservative Abschätzung für den Sichtprozess zu erhalten. In der folgenden Tabelle sind die entsprechenden Ergebnisse dargestellt.
Mittlere Partikelgrößen, Grindometerwert und Feingutanteile von gesichteten Fällungskieselsäuren

| | Standard gemäß EP 0 901 986 | Erfindungs- gemäße Kieselsäure | V1-F | V2-F | V3-F | V4-F | V6-F | V7-F | V8-F | V9-F | V10-F |
|---|---|---|---|---|---|---|---|---|---|---|---|
| $d_{50}$ | 6,00 | 8,20 | 8,30 | 7,50 | 6,90 | 6,40 | 6,00 | 7,10 | 6,30 | 7,50 | - |
| Grindometer wert in $\mu$m | 28,00 | 39,00 | 30,67 | 27,00 | 22,00 | 27,00 | 28,67 | 27,00 | 24,00 | 24,00 | 28,00 |
| Stippen bis, in $\mu$m | - | 86,67 | 40,00 | 36,67 | 33,67 | 38,67 | 41,33 | 36,00 | 34,33 | 35,33 | 38,67 |
| Ausbeute bzw. Feingutanteil | - | 1,00 | 0,99 | 0,99 | 0,92 | 0,64 | 0,52 | 0,98 | 0,92 | 0,95 | 0,89 |

Die Daten zeigen, dass eine deutliche Reduzierung der Stippen und der Grindometerwerte erreichbar ist. Es wurden Grindometerwerte von 22 - 31 µm bei mittleren Partikelgrößen von 6,4 - 8,3 µm erzielt. Zum Grossteil enthielten die gesichteten Produkte noch geringe Mengen an Stippen, die jedoch auf den sehr hohen Stippengehalt des Ausgangsmaterials zurückgeführt werden können. Die Feingutanteile der Sichtungen lagen in der Mehrzahl der Fälle im Bereich von 90 - 99 % und somit bei relativ hohen Ausbeuten.

Die Ergebnisse zeigen, dass durch eine nachgeschaltete, effiziente Sichtung der PCD-Produkte Stippengehalte und Grindometerwerte erreicht werden können, die für Mattierungsmittel typisch bzw. gefordert sind.

**Patentansprüche**

1.   Fällungskieselsäure, **dadurch gekennzeichnet, dass**

     sie eine kugelförmige Partikelform

     sowie die folgenden physikalisch-technischen Daten:

| BET-Oberfläche (DIN 66131) | $m^2$/g | 100 - 700 |
|---|---|---|
| DBP-Absorption (DIN 53601, bezogen auf getrocknete Substanz) | g/100 g | 100 - 500 |
| Stampfdichte (ISO 787-11) | g/l | 100 - 250 |
| ALPINE-Siebrückstand > 63µ (ISO 8130-1) | % | < 5 |
| Partikelgrößen | $d_{95}$ | < 40 µm |
| (Volumensummenverteilung) | $d_{50}$ | < 20 µm |
| | $d_5$ | <10 µm |

     aufweist.

2.   Kieselsäure nach Anspruch 1,
     **dadurch gekennzeichnet,**
     **dass** sie eine BET-Oberfläche zwischen 150 und 600 $m^2$/g aufweist.

3.   Kieselsäure nach Anspruch 1 oder 2,
     **dadurch gekennzeichnet,**
     **dass** die Kieselsäure eine organische Beschichtung aufweist.

4.   Kieselsäure nach einem der Ansprüche 1 bis 3,
     **dadurch gekennzeichnet,**
     **dass** die Kieselsäure hydrophob ist.

5.   Kieselsäure nach einem der Ansprüche 1 bis 4,
     **dadurch gekennzeichnet,**
     **dass** die Kieselsäurepartikel eine hohe Dispergierbarkeit mit einem wk-Koeffizienten von kleiner 3.4 aufweist.

6.   Verfahren zur Herstellung einer Fällungskieselsäure nach einem der Ansprüche 1 bis 5,
     **dadurch gekennzeichnet**,
     das eine Fällungskieselsäuresuspension mittels eines Pulse Combustion Dryers getrocknet wird.

7.   Verfahren nach Anspruch 6,
     **dadurch gekennzeichnet,**
     **dass** die Trocknungstemperatur 400 - 800 °C beträgt.

8.   Verfahren nach einem der Ansprüche 6 oder 7,
     **dadurch gekennzeichnet,**
     **dass** die Kieselsäuresuspension einen Feststoffgehalt von 5 bis 25 Gew.-% aufweist.

9.   Verfahren nach einem der Ansprüche 6 bis 8,

**dadurch gekennzeichnet,**
**dass** die Kieselsäure vor der Trocknung eine organische Beschichtung erhält.

10. Verfahren nach einem der Ansprüche 6 bis 9,
**dadurch gekennzeichnet,**
**dass** die Kieselsäure vor der Trocknung hydrophobiert wird.

11. Verfahren nach einem der Ansprüche 6 bis 10,
**dadurch gekennzeichnet,**
**dass** die Kieselsäure eine hohe Dispergierbarkeit mit einem wk-Koeffizienten von kleiner 3.4 aufweist.

12. Verfahren nach einem der Ansprüche 6 bis 11,
**dadurch gekennzeichnet,**
**dass** die Kieselsäure nach der Trocknung klassiert wird.

13. Verfahren nach einem der Ansprüche 6 bis 12,
**dadurch gekennzeichnet,**
**dass** der Pulse Combustion Dryer einen Drallkörper für die zur Trocknung verwendete Luftströmung aufweist.

14. Verwendung der Kieselsäure nach einem der Ansprüche 1 bis 5 in Elastomerenmischungen.

15. Verwendung der Kieselsäure nach einem der Ansprüche 1 bis 5 als Mattierungsmittel für Lacke.

16. Elastomerenmischungen, enthaltend eine Kieselsäure gemäß einem der Ansprüche 1 bis 5.


**Claims**

1. A precipitated silica **characterized in that** it has a spherical particle shape and the following physical properties:

| | | |
|---|---|---|
| BET surface area (DIN 66131) | $m^2/g$ | 100-700 |
| DBP absorption (DIN 53601, based on dry matter) | g/100 g | 100-500 |
| Tamped density (ISO 787-11) | g/l | 100-250 |
| ALPINE sieve residue > 63μ (ISO 8130-1) | % | < 5 |
| Particle size (Cumulative volume distribution) | $d_{95}$ | < 40 μm |
| | $d_{50}$ | < 20 μm |
| | $d_5$ | < 10 μm |

2. A silica according to claim 1, **characterized in that** it has a BET surface area of from 150 to 600 $m^2 g$.

3. A silica according to either of claims 1 and 2, **characterized in that** the silica has an organic coating.

4. A silica according to any one of claims 1 to 3, **characterized in that** the silica is hydrophobic.

5. A silica according to any one of claims 1 to 4, **characterized in that** the silica particle has a high dispersibility with a wk coefficient of less than 3.4.

6. A process for producing a precipitated silica according to any one of claims 1 to 5, **characterized in that** a precipitated silica suspension is dried by means of a pulse combustion dryer.

7. A process according to claim 6, **characterized in that** the drying temperature is 400 - 800°C.

8. A process according to either one of claims 6 and 7, **characterized in that** the silica suspension has a solids content of from 5 to 25% by weight.

9. A process according to any one of claims 6 to 8, **characterized in that** the silica is provided with an organic coating prior to drying.

10. A process according to any one of claims 6 to 9, **characterized in that** the silica is made hydrophobic prior to drying.

11. A process according to any one of claims 6 to 10, **characterized in that** the silica has a high dispersibility with a wk coefficient of less than 3.4.

12. A process according to any one of claims 6 to 11, **characterized in that** the silica is classified after drying.

13. A process according to any one of claims 6 to 12, **characterized in that** the pulse combustion dryer has a swirl-inducing element for the air stream used for drying.

14. The use of silica according to any one of claims 1 to 5 in an elastomer mixture.

15. The use of silica according to any one of claims 1 to 5 as matting agent for a surface coating.

16. An elastomer mixture containing a silica according to any one of claims 1 to 5.

**Revendications**

1. Acide silicique de précipitation,
   **caractérisé en ce qu'**
   il présente des particules de forme sphérique ainsi que les données physico-techniques suivantes :

   - Surface BET (DIN 66131)      $m^2/g$      100-700
   - Absorption de DBP (DIN 53601,      g/100 g      100 - 500 par rapport à la substance sèche)
     Densité du produit tassé (ISO 787-11) g/l      100 - 250
   - Refus de criblage
     ALPINE > 63 µ (ISO 8130-1)      < 5
   - Tailles des particules      $d_{95}$      < 40 µm (répartition totale des volumes)      $d_{50}$      < 20 µm
     $d_5$ > 10 µm

2. Acide silicique selon la revendication 1,
   **caractérisé en ce qu'**
   il présente une surface BET comprise entre 150 et 600 $m^2$.

3. Acide silicique selon la revendication 1 ou 2,
   **caractérisé en ce qu'**
   il présente un revêtement organique.

4. Acide silicique selon l'une quelconque des revendications 1 à 3,
   **caractérisé en ce qu'**
   il est hydrophobe.

5. Acide silicique selon l'une quelconque des revendications 1 à 4,
   **caractérisé en ce que**
   ses particules présentent une dispersibilité élevée d'un coefficient wk < 3,4.

6. Procédé de préparation d'acide silicique de précipitation selon l'une quelconque des revendications 1 à 5,
   **caractérisé en ce qu'**
   une suspension d'acide silicique de précipitation est séchée au moyen d'un Pulse Combustion Dryer.

7. Procédé selon la revendication 6,
   **caractérisé en ce que**
   la température de séchage est de 400 à 800°C.

**8.** Procédé selon l'une quelconque des revendications 6 ou 7,
**caractérisé en ce que**
la suspension d'acide silicique présente une teneur en substance solide de 5 % à 25 % en poids.

**9.** Procédé selon l'une quelconque des revendications 6 à 8,
**caractérisé en ce que**
l'acide silicique reçoit un revêtement organique avant le séchage.

**10.** Procédé selon l'une quelconque des revendications 6 à 9,
**caractérisé en ce que**
l'acide silicique est hydrophobé avant le séchage.

**11.** Procédé selon l'une quelconque des revendications 6 à 10,
**caractérisé en ce que**
l'acide silicique présente une dispersibilité élevée d'un coefficient wk < 3,4.

**12.** Procédé selon l'une quelconque des revendications 6 à 11,
**caractérisé en ce que**
l'acide silicique est calibré après le séchage.

**13.** Procédé selon l'une quelconque des revendication 6 à 12,
**caractérisé en ce que**
le Pulse Combustion Dryer présente des aubes de turbulence pour l'écoulement de l'air utilisé pour le séchage.

**14.** Utilisation de l'acide silicique selon l'une quelconque des revendications 1 à 5 dans des mélanges d'élastomères.

**15.** Utilisation de l'acide silicique selon l'une quelconque des revendications 1 à 5 en tant qu'agent matifiant pour les peintures.

**16.** Mélanges d'élastomères contenant un acide silicique selon l'une quelconque des revendications 1 à 5.

**Figur 1**    Schematische Darstellung des PCD mit den Hauptanlagenkomponenten

a)    natural gas

b)    blower

c)    burner

d)    compressed air

e)    ambient air

f)    exhaust blower

g)    exhaust air

h)    cooling water (in/out)

i)    filter

j)    cyclone

k)    feed liquid

l)    feed pump

m)    drying chamber

n)    product discharge

**Figur 2**     Anordnung der Gasdüse, der Flüssigkeitsdüse und des Luftrings in einer Versuchsanordnung

a)          Verbrennungsgas

b)          Suspension

c)          Umgebungsluft

d)          Trocknungskammer

**Figur 3**     Prinzipskizze des Drallkörpers

a)  Heißgasstrom

b)  Strahlaufweitung beim Eintritt in die Trockungskammer

**Figur 4**     Rasterelektronenmikroskopische Aufnahme von gefällter Kieselsäure, getrocknet im Pulse Combustion Dryer

**Figur 5**     Rasterelektronenmikroskopische Aufnahme von pyrogener Kieselsäure, getrocknet im Pulse Combustion Dryer

**Figur 6**     Rasterelektronenmikroskopische Aufnahme von gefällter Kieselsäure, getrocknet im Pulse Combustion Dryer

**Figur 7**     Rasterelektronenmikroskopische Aufnahme von gefällter Kieselsäure, getrocknet im Pulse Combustion Dryer

**Figur 8**     Rasterelektronenmikroskopische Aufnahme von gefällter Kieselsäure, getrocknet im Pulse Combustion Dryer

**Figur 9**     Rasterelektronenmikroskopische Aufnahme von pyrogener Kieselsäure, getrocknet im Pulse Combustion Dryer

**Figur 10**  Rasterelektronenmikroskopische Aufnahme von gefällter Kieselsäure, getrocknet im Pulse Combustion Dryer

Ermittlung des wk-Koeffizienten

Fig. 11